(19) Europäisches Patentamt
European Patent Office
Office européen des brevets

(11) **EP 0 937 862 B1**

(12) **EUROPÄISCHE PATENTSCHRIFT**

(45) Veröffentlichungstag und Bekanntmachung des Hinweises auf die Patenterteilung:
**10.12.2003 Patentblatt 2003/50**

(51) Int Cl.7: **F01D 5/14**

(21) Anmeldenummer: **99103028.9**

(22) Anmeldetag: **16.02.1999**

(54) **Anordnung von Axialturbinenschaufeln**

Arrangement of axial turbines blades

Disposition des aubes des turbines axiales

(84) Benannte Vertragsstaaten:
**DE FR GB**

(30) Priorität: **20.02.1998 DE 19807179**

(43) Veröffentlichungstag der Anmeldung:
**25.08.1999 Patentblatt 1999/34**

(73) Patentinhaber: **Rolls-Royce Deutschland Ltd & Co KG**
**15827 Dahlewitz (DE)**

(72) Erfinder: **Schulte, Volker Dr.**
**82216 Maisach (DE)**

(74) Vertreter: **Hager, Thomas J., Dipl.-Ing.**
**Hoefer & Partner**
**Patentanwälte**
**Gabriel-Max-Strasse 29**
**81545 München (DE)**

(56) Entgegenhaltungen:
**DE-C- 4 344 189**      **US-A- 5 354 178**

**Beschreibung**

Die Erfindung betrifft eine Axialturbine mit zumindest je einem Rotor-Schaufelgitter und einem Stator-Schaufelgitter von in einem ringförmigen Strömungskanal in Turbinen-Umfangsrichtung betrachtet in Reihe angeordneten Turbinen-Schaufeln. Zum technischen Umfeld wird beispielshalber auf die DE 43 44 189 C1 verwiesen.

Eine erfindungsgemäße Axialturbine kann insbesondere bei einer Fluggasturbine zum Einsatz kommen, daneben aber auch generell bei stationären Gas- und Dampfturbinen. Bezüglich der Ausbildung der Turbinen-Schaufeln betrifft die vorliegende Erfindung in erster Linie dünne Vollschaufeln (sowohl am Rotor als auch am Stator) für ungekühlte Niederdruckturbinen in Mehr-Wellen-Triebwerken. Möglich ist jedoch auch eine Anwendung auf andere Typen von Axialturbinen, so zum Beispiel gekühlte Hochdruckturbinen mit Hohlschaufeln.

Die Anmeldung betrifft insbesondere Axialturbinen mit einem Reaktionsgrad von 50 % oder geringer. Daher wird im weiteren auch - um eine eindeutige Zuordnung der definierten Belastungsparameter mit der aerodynamischen Belastung der Schaufelgitter zu erreichen - auf den dem Fachmann bekannten Staffelungswinkel Bezug genommen. Der Reaktionsgrad einer Axialturbine, welcher ein Maß für die Aufteilung des Druckabbaus auf Rotor- und Statorschaufeln ist, korreliert in erster Näherung mit dem Staffelungswinkel der Schaufelprofile. Turbinen mit einem Reaktionsgrad von um die 50 % haben Staffelungswinkel von 30° oder geringer im Mittelschnitt, d.h. bei unter 55 % der Gesamt-Schaufelhöhe. Der dem Fachmann bekannte Reaktionsgrad, der zur Auslegung von Gasturbinen als mittlerer Reaktionsgrad von 0,5 zugrunde gelegt wird, folgt dem Verhältnis $\Delta p_r$ zu $\Delta p_o$ wobei $\Delta p_r$ der Druckabbau, d.h. die Expansion im Rotor, und $\Delta p_o$ der gesamte Abbau des Totaldruckes in der Turbinenstufe ist. Demnach ist der Reaktionsgrad ein Maß für die Aufteilung des Druckabbaus auf Rotor- und Statorschaufeln.

Unter anderem im bevorzugten Anwendungsfall einer Niederdruckturbine ist die Anzahl der Schaufeln im Schaufelgitter, d.h. pro Schaufelreihe in erster Linie durch aerodynamische Kriterien wie bspw. die Zweifel-Zahl oder andere aerodynamische Belastungsparameter bestimmt. Unter Berücksichtigung derartiger Belastungsparameter wird dabei angestrebt, so wenig Schaufeln als möglich in einem Schaufelgitter anzuordnen, da sich die Schaufelzahl direkt auf das Modulgewicht sowie auf die Herstellkosten auswirkt. Hersteller von Flugtriebwerken benutzen in der Regel ein aerodynamisches Belastungskriterium, welches das Minimum der Anzahl der Schaufeln je Rotor- und Stator-Schaufelkranz bzw. -Schaufelgitter vorgibt.

Die bereits erwähnte Zweifel-Zahl, die ein Maß für die aerodynamische Belastung einer einzelnen Turbinen-Schaufel ist, ist eine dimensionslose Kenngröße zur Charakterisierung der in Umfangsrichtung auf die Schaufel wirkenden Kraft. Dabei ist die Zweifel-Zahl ursprünglich für eine zweidimensionale Strömung definiert, bspw. im ebenen Gittertest. Hier wird die auf den zweidimensionalen Schaufelschnitt wirkende Kraft in Umfangsrichtung auf eine Referenzkraft bezogen, welche durch eine gedachte "ideale" Schaufeldruckverteilung beschrieben ist. Die Referenzverteilung weist auf der Druckseite der Schaufel einen konstanten Druck, der gleich dem Totaldruck am Eintritt ist, und auf der Saugseite der Schaufel einen konstanten Druck, der gleich dem statischen Druck am Austritt ist, auf.

Eine vergleichbare Kenngröße wird auch zur Auslegung realer dreidimensionaler Schaufeln verwendet. Dort wird die Auslegung in der Regel auf quasi zweidimensionalen Stromflächen durchgeführt. Solche variieren in der Dicke und im Radius vom Schaufeleintritt zum Schaufelaustritt, was die Definition eines Belastungsparameters etwas schwieriger macht. Das Prinzip wird jedoch in Anlehnung an die zweidimensionle Strömung auf die Auslegung mehrerer zweidimensionalen Schnitte übertragen, um dann anschließend die reale, dreidimensionale Schaufel aus den im wesentlichen zweidimensional ausgelegten Profilschnitten zusammensetzen zu können.

Je größer die Zweifel-Zahl bzw. allgemein der Belastungparameter ist, desto höher ist die aerodynamische Belastung der Schaufel. Große Zweifel-Zahlen bedeuten, daß auf der Saugseite des Schaufelprofiles in der Regel Gebiete verzögerter Strömung in Kauf genommen werden müssen, obwohl die Strömung im Turbinengitter in den meisten Fällen im Mittel beschleunigt wird. Eine verzögerte Strömung birgt aber stets die Gefahr der Grenzschichtablösung. Dies wird meistens als unerwünscht betrachtet, weil dadurch die Strömungsverluste ansteigen. Jedoch auch ohne Ablöseerscheinungen hat eine Verzögerung der Strömung entlang der Saugseite des Schaufelprofils zur Folge, daß die Grenzschichtdicke anwächst und dadurch die Strömungsverluste steigen.

Andererseits kann an Schaufelgittern, deren Schaufeln auf eine relativ große Zweifel-Zahl hin ausgelegt werden, unter gegebenen aerodynamischen Randbedingungen (wie z.B. Gesamtmassenstrom, Mach-Zahl, Reaktionsgrad, Arbeit oder Umlenkung) die Anzahl der Schaufeln verringert werden, was aus einem vergrößertem Teilungsverhältnis resultiert.

In der Praxis bedeutet dies nun, daß die erhöhten Verluste und Einbußen im Wirkungsgrad, die durch stärkere Verzögerung auf den Schaufelprofil-Saugseiten entstehen, gegen erhöhte Schaufelzahlen und die damit verbundenen erhöhten Herstellkosten sowie das höhere Gewicht abgewogen werden müssen. Insbesondere in seriengefertigten Fluggasturbinen spielen Kosten und Gewicht eine relativ große Rolle, so daß es sinnvoll sein kann, die Zweifel-Zahl über ein rein aerodynamisch optimales Maß hinaus zu erhöhen.

Im bekannten Stand der Technik wird die aerodynamische Schaufelbelastung im wesentlichen auf relativ niedrige Zweifel-Zahlen limitiert, um die aerodynamischen Verluste nicht zu stark ansteigen zu lassen. Die zulässige Zweifel-Zahl (bzw. die zulässige Strömungs-Verzögerung auf der Saugseite des Schaufelprofiles) ist dabei um so niedriger, je niedriger die Reynolds-Zahl ist. Bei niedrigen Reynolds-Zahlen ist die Gefahr von sich nicht wiederanlegenden Ablöseblasen besonders groß. Auch wächst die Grenzschicht schneller an.

Neuere Ergebnisse zeigen jedoch, daß die Strömungsverluste und somit der Wirkungsgrad einer Turbine sehr stark vom Zustand der Grenzschicht abhängt . Im besonderen hat sich gezeigt, daß die instationäre Wechselwirkung mit stromaufliegenden Schaufelreihen eine große Rolle spielt. Die saugseitige Grenzschicht wird dabei periodisch durch die Nachlaufströmung der stromauf liegenden Schaufelreihe zum Umschlag gebracht und es bildet sich eine sehr komplexe aber vorteilhafte Grenzschichtentwicklung aus. Diese ist geprägt von abwechselnd laminaren, transitionalen, turbulenten und sog. laminar beruhigten Zonen. Die laminar beruhigten Zonen treten nur bei instationären Grenzschichten auf, sind jedoch für deren Verlustverhalten vorteilhaft.

Dies gilt nun insbesondere für Niederdruckturbinen in Fluggasturbinen, da dort die Reynolds-Zahlen sehr niedrig sind und die überwiegend laminaren Grenzschichten zur Ablösung neigen. Während konventionelle Zweifel-Zahl Kriterien insbesondere bei niedrigen Reynolds-Zahlen oft von Untersuchungen in idealisierten Versuchen (z.B. einem ebenen Gittertest mit stationär homogener Zuströmung) abgeleitet wurden, können durch die Erkenntnis, daß die instationäre Strömung eine nicht zu vernachlässigende Rolle spielt, neue Zweifel-Zahl-Kriterien entwickelt werden, die vor allem bei sehr niedrigen Reynolds-Zahlen über den bisherigen Kriterien liegen, ohne eine Erhöhung der Verluste zu bewirken.

Neben der Zweifel-Zahl ist der Verlauf der Druckverteilung (der sog. "liftstyle") insbesondere auf der Saugseite eines Schaufelprofiles ausschlaggebend für die Höhe der aerodynamischen Verluste. Durch eine vorteilhafte Wahl der Druckverteilung in Verbindung mit einer hohen Zweifel-Zahl läßt sich damit gegenüber dem üblichen Stand der Technik die Anzahl der Schaufel pro Schaufelreihe reduzieren, ohne gleichzeitig die Strömungsverluste zu erhöhen und damit den Wirkungsgrad abzusenken.

Die Zweifel-Zahl als solche, wie auch der Verlauf der Druckverteilung ("lift-style") sind aerodynamische Kriterien, die sich nicht problemlos in konstruktive Merkmale einer Turbinenschaufel übertragen lassen. Je nach aerodynamischen Randbedingungen (z.B. Massenstrom, Arbeitsumsetzung pro Stufe, Mach-Zahlen, Reaktionsgrad, Umlenkung etc.) wird die Anwendung der gleichen Zweifel-Zahl und des gleichen "lift-styles" in der Auslegung dennoch zu unterschiedlichen Schaufelprofilformen führen.

Die erwähnten neuen Kriterien für die Zweifel-Zahl und den Verlauf der Druckverteilung ("lift-style"), die der vorliegenden Erfindung zu Grunde liegen, werden im Rahmen dieser Erfindung in konstruktive Merkmale von Turbinen-Schaufelgittern und Turbinen-Schaufelprofilen bzw. Profilschnitten übersetzt.

Hierbei handelt es sich demzufolge um die Aufgabe der vorliegenden Erfindung, nämlich um die Angabe reproduzierbarer Kriterien, mit Hilfe derer letztendlich unter Verwendung höherer Zweifel-Zahlen sowie einem geänderten Verlauf der Druckverteilung die Anzahl der Schaufeln je Schaufelkranz bzw. Schaufelgitter gegenüber der bisher üblichen Anzahl erheblich reduziert werden kann. Letzteres wirkt sich - wie bereits erwähnt - hinsichtlich des Gewichtes sowie der Herstellkosten einer Axialturbine äußerst vorteilhaft aus.

Zur Lösung dieser Aufgabe sind die im kennzeichnenden Teil des Anspruchs 1 angegebenen Merkmale vorgesehen, wobei zwei Alternativmaßnahmen vorgeschlagen sind. Vorteilhafte Weiterbildungen sind Inhalt der Unteransprüche.

Bevor diese erfindungsgemäßen Merkmale anhand der beigefügten Prinzipskizzen näher erläutert werden, sei zunächst noch darauf hingewiesen, daß die Zweifel-Zahl, welche vorerst nur in einer zweidimensionalen Strömung definiert ist, näherungsweise, zumindest bei konstantem Reaktionsgrad, in das dem Fachmann bekannte Teilungsverhältnis übertragen werden kann. Ein erhöhtes Teilungsverhältnis entspricht somit einer erhöhten Zweifel-Zahl. Zwar gilt dies streng genommen nur unter der Voraussetzung, daß die Machzahlen und die Umlenkung bzw. der Reaktionsgrad konstant bleiben. Da jedoch in der Praxis Niederdruckturbinen in einem relativ kleinen vorteilhaften Bereich von Stufenbelastungen (Druckverhältnis und kinematische Belastung) sowie Reaktionsgraden ausgelegt werden, charakterisiert das Teilungsverhältnis als konstruktives Merkmal das aerodynamische Kriterium der Zweifel-Zahl.

Für die Betrachtung der dreidimensionalen Strömungsverhältnisse in Turbinenschaufelpassagen ist bereits die Definition eines aerodynamischen Belastungsparameters, der ähnlich der Zweifel-Zahl in zweidimensionaler Strömung sein soll, nicht einfach. Jedoch wird auch hierbei in Analogie zu der Vorgehensweise bei zweidimensionaler Strömung ein Teilungsparameter definiert, der ein Maß für die aerodynamische Belastung der Schaufel darstellt. Dieser unter Berücksichtigung dreidimensionaler Strömungsverhältnisse definierte Teilungsparameter wird im folgenden als 3D-Teilungsparameter Y bezeichnet und charakterisiert (analog dem bekannten zweidimensionalen Teilungsparameter) die aerodynamische Belastung einer Schaufel in einem Schaufelgitter.

Mit der vorliegenden Erfindung werden bevorzugte Werte für diesen 3D-Teilungsparameter angegeben. Eine weitere charakteristische Größe in einem Turbinen-Schaufelgitter ist das Teilungsverhältnis in seiner üblichen Definition, für welches ebenfalls mit der vorliegenden Erfindung bevorzugte Werte angegeben werden. Diese beiden charakteristischen Größen sollen dabei für Turbinen- Reaktionsgrade in der Größenordnung von 50% oder geringer gelten. Dies entspricht einem Staffelungswinkel von kleiner 30° unterhalb einer Schaufelhöhe von 55 % der Gesamt-Schaufelhöhe und deckt den Hauptanwendungsbereich moderner Niederdruckturbinen in Flug-Gasturbinen ab.

Näher erläutert wird nun die Erfindung anhand der beigefügten Prinzipskizzen, wobei

Fig.1 einen Längs-Halbschnitt einer Axialturbine und

Fig.2 in üblicher Darstellung die Abwicklung eines Schaufelgitters (bzw. Schaufelkranzes) zeigt.

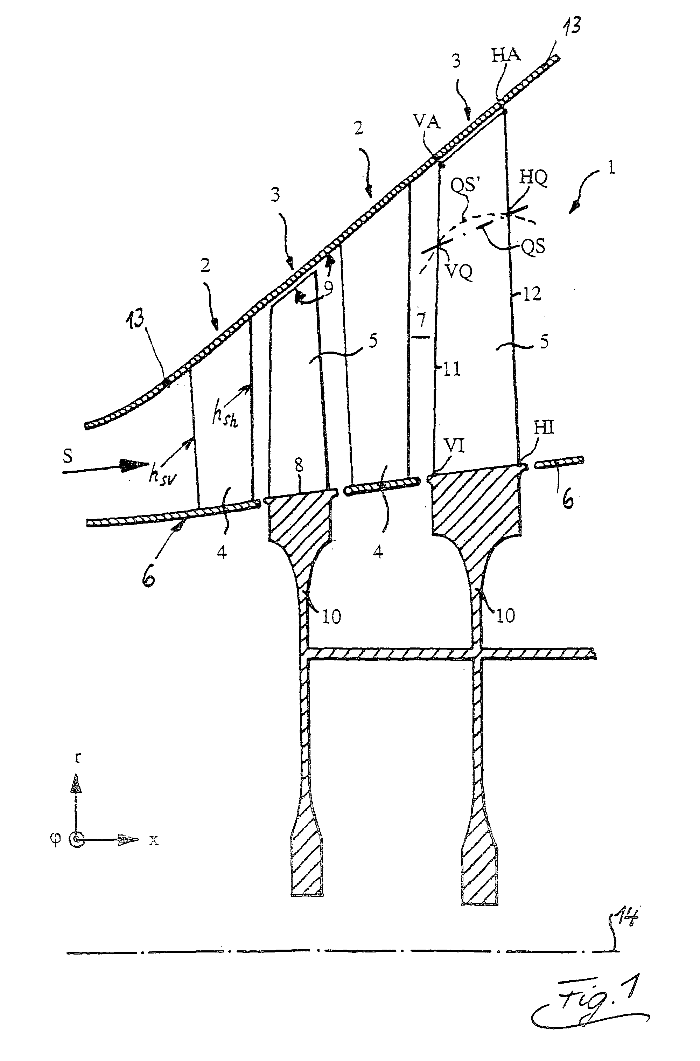

Bei der in Fig.1 gezeigten Darstellung einer Axialturbine 1 in einem Radial-Axial-Schnitt ist das übliche Zylinderkoordinatensystem verwendet, wobei die Axialrichtung mit der Axial-(oder auch Längs-) Koordinate x und die Radialrichtung mit der Radial-Koordinate r bezeichnet ist. Die dritte Koordinate ist die Umfangskoordinate φ. In der Darstellung nach Fig.1 ist ein beliebiger Punkt somit durch seine Ortskoordinaten X (dies ist die Axialkoordinate) und R (dies ist die Radialkoordinate) beschreibbar.

Wie üblich weist auch die gezeigte Axialturbine 1 abwechselnd angeordnete Leit-Schaufelgitter 2 und Lauf-Schaufelgitter 3 auf. Jeweils ein Leit-Schaufelgitter 2 bzw. Stator-Schaufelgitter 2 und ein Lauf-Schaufelgitter 3 bzw. Rotor-Schaufelgitter 3 bilden eine Stufe. Fig. 1 zeigt somit eine zweistufige Axialturbine 1.

Jedes Stator-Schaufelgitter 2 besteht aus gleichartigen Stator-Schaufeln 4, die in Turbinen-Umfangsrichtung φ hintereinander bzw. in Reihe angeordnet sind. In gleicher Weise besteht jedes Rotor-Schaufelgitter 3 aus einer Mehrzahl von gleichartigen Rotor-Schaufeln 5. Die Schaufelblätter bzw Schaufeln 4, 5 der Schaufelgitter 2, 3 erstrecken sich dabei in Radialrichtung r in einen zur Maschinenachse 14 konzentrisch verlaufenden ringförmigen Strömungskanal 7, in welchem gemäß Strömungsrichtung S ein Arbeitsfluid durch die Schaufelgitter 2, 3 hindurchgeführt wird.

Dieser Strömungskanal 7 wird in radialer Richtung r innenseitig durch den Stator in Form einer Statorwand 6 und ferner durch die nicht näher bezeichneten Plattformen am Fuß der Rotor-Schaufeln 5 begrenzt, wobei diese genannten Elemente die sog. innere Kanalbegrenzung 8 bilden. In radialer Richtung r außenseitig wird der Strömungskanal 7 durch eine Gehäusewand 13 begrenzt, wobei jedoch im folgenden als äußere Kanalbegrenzung 9 im Bereich der Rotor-Schaufeln 9 entweder deren Schaufelsspitzen oder ein (hier nicht gezeigtes) Deckband des Rotor-Schaufelgitters 3 bezeichnet wird. Für die Stator-Schaufeln 4 stellt somit die Innenseite der Gehäusewand 13 die äußere Kanalbegrenzung 9 dar, für die Rotor-Schaufeln 5 hingegen ist die äußere Kanalbegrenzung 9 gegenüber der Innenseite der Gehäusewand 13 um das Spaltmaß des selbstverständlich erforderlichen Spitzenspaltes zwischen den Rotor-Schaufeln 3 und der Gehäusewand 13 radial nach innen gezogen.

Die innere Kanalbegrenzung 8 sowie die äußere Kanalbegrenzung 9 verlaufen dabei jeweils konzentrisch zur Maschinenachse 14 und weisen bezüglich der Strömungsrichtung S des im Strömungskanal 7 durch die Schaufelgitter 2, 3 hindurchgeführten Arbeitsfluids einen divergenten Verlauf auf, so daß sich der Strömungskanal 7 in Strömungsrichtung S erweitert.

Bezüglich der Rotor-Schaufelgitter 3 sei noch erwähnt, daß diese hier in Scheibenbauweise ausgeführt sind, d.h. die Rotor-Schaufeln 5 sind gitterförmig an einer um die Maschinenachse 14 rotierenden Laufscheibe 10 angebracht.

Die Definition des o.g. 3D-Teilungsparameters erfordert zunächst die Definition von Schaufel-Eckpunkten sowie von einer Quasi-Stromfläche $QS$ bezüglich eines Schaufelgitters 2 bzw. 3.

Die sog. Schaufel-Eckpunkte $VA, HA, VI, HI$ sind dabei in Fig.1 exemplarisch für das in Strömungsrichtung S betrachtet zweite Rotor-Schaufelgitter 3 dargestellt. In der gezeigten Ansicht ergeben sich die vier Schaufel-Eckpunkte $VA, HA, VI, HI$ jeweils als Schnittpunkte der Schaufelvorderkante 11 bzw der Schaufelhinterkante 12 mit der inneren Kanalbegrenzung 8 bzw. der äußeren Kanalbegrenzung 9:

Der Schaufel-Eckpunkt $VA$ ist somit der Schnittpunkt zwischen der Schaufelvorderkante 11 mit der äußeren Kanalbegrenzung 9 und liegt in Strömungsrichtung S betrachtet vorne sowie in Radialrichtung r betrachtet außen. In analoger Weise handelt es sich bei $HA$ um den in Strömungsrichtung S betrachtet hinteren und in Radialrichtung r betrachtet äußeren Schaufel-Eckpunkt, der durch die Verschneidung der äußeren Kanalbegrenzung 9 mit der Schaufelhinterkante 12 definiert ist.

Der Schaufel-Eckpunkt $VI$ ergibt sich aus der Verschneidung der Schaufelvorderkante 11 mit der inneren Kanalbegrenzung 8, d.h. $VI$ ist der in Strömungsrichtung S betrachtet vordere und in Radialrichtung r betrachtet innere Schaufel-Eckpunkt, während $HI$ schließlich der in Strömungsrichtung S betrachtet hintere und in Radialrichtung r betrachtet innere Schaufel-Eckpunkt ist, der sich auch durch den Schnittpunkt der Schaufelhinterkante 12 mit der inneren Kanalbegrenzung 8 beschreiben läßt.

Als eine Quasi-Stromfläche $QS$ eines Schaufelgitters 2 oder 3 wird hier nun eine rotationssymmetrische Fläche definiert, welche sich durch einen beliebigen rotationssymmetrischen Schnitt in Form einer konzentrischen Fläche durch die zugehörige Reihe von Schaufeln 4 oder 5 ergibt, mit der Bedingung, daß dieser Schnitt durch die gleiche prozentualen Höhe der Schaufelvorderkante 11 und der Schaufelhinterkante 12 verläuft.

Dabei ist die Höhe $h_{sv}$ der Schaufelvorderkante 11 - in Fig.1 dargestellt am Beispiel des zweiten Rotor-Schaufelgitters 3 - definiert durch:

$$h_{sv} = R(VA) - R(VI)$$

Analog ist die Höhe $h_{sh}$ der Schaufelhinterkante 12 definiert durch:

$$h_{sh} = R(HA) - R(HI)$$

Fig.1 stellt exemplarisch einen solchen Schnitt *QS* durch das zweite Rotorgitter 3 dar. Aber auch der Schnitt *QS'* gilt als Quasi-Stromfläche im Sinne obiger Definition, da er die gleichen Schnittpunkte VQ und HQ mit der Schaufelvorderkante 11 bzw. der Schaufelhinterkante 12 aufweist und daher auch die folgende Bedingung bezüglich der prozentualen Schaufelhöhen $h_{sv}$ bzw. $h_{sh}$ erfüllt.

Für die beiden Schnitte bzw. Quasi-Stromflächen *QS* und *QS'* gilt nämlich:

$$\left|\frac{Radius(VQ) - Radius(VI)}{Radius(VA) - Radius(VI)}\right| = \left|\frac{Radius(HQ) - Radius(HI)}{Radius(HA) - Radius(HI)}\right| \, ,$$

wobei *Radius*(*VQ*) und *Radius*(*HQ*) die Radien der mit VQ bzw. HQ gekennzeichneten Schnittpunkte der Quasi-Stromfläche *QS* mit der Schaufelvorderkante 11 bzw. der Schaufelhinterkante 12 des zweiten Rotor-Schaufelgitters 3 bezeichnen.

Auf diese Definitionen aufbauend wird nun ein 3D-Teilungsparameter Y eines Schaufelgitters 2, 3 wie folgt definiert:

$$Y = \frac{2\pi\bar{r}}{N_{off}\bar{C}_{ax}}$$

mit

$$\bar{r} = \frac{R(VA)+R(VI)+R(HA)+R(HI)}{4},$$

$N_{off}$ ist die Anzahl der Schaufeln 4, 5 des Schaufelgitters 2, 3, und

$$\bar{C}_{ax} = \frac{\sqrt{(X(HA)\text{-}X(VA))^2 + (R(HA\text{-}R(VA))^2} + \sqrt{(X(HI)\text{-}X(VI))^2 + (R(HI)\text{-}R(VI))^2}}{2}$$

Wird nun für ein Schaufelgitter 2 bzw. 3 eine derartige Zahl von Schaufeln $N_{off}$ gewählt, daß sich mit den angegebenen Definitionen der Wert des beschriebenen 3D-Teilungsparameters zu größer als 1,0 ("eins") ergibt, so erhält man ein Schaufelgitter 2, 3, bei welchem unter Verwendung höherer Zweifel-Zahlen sowie einem geänderten Verlauf der Druckverteilung die Anzahl $N_{off}$ der Schaufeln 4, 5 je Schaufelkranz bzw. je Schaufelgitter gegenüber der bisher üblichen Anzahl erheblich reduziert ist.

Das genannte Kriterium Y>1,0, und damit die Erfindung, beschränkt sich auf Axialturbinen, für die $\beta_s$ < 30° für alle Quasi-Stromflächen (QS) unterhalb von 55% Schaufelhöhe ($h_{sv}$ bzw. $h_{sh}$) und stellt die im kennzeichnenden Teil des Patentanspruchs angegebene erste Bedingung (A) dar.

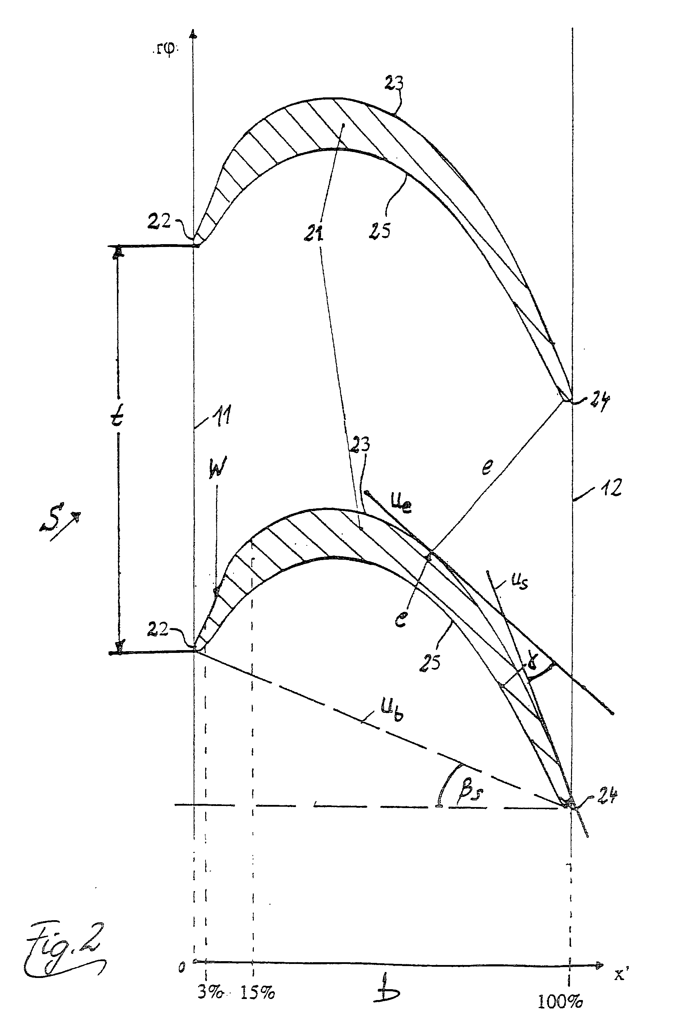

Aufgefunden wurde jedoch noch ein weiteres Kriterium bzw. eine zweite Bedingung (B), welche zu einem vergleichbaren Ergebnis führt. In diese Bedingung (B) geht die Geometrie der Schaufeln 4, 5 bzw. deren Schaufelprofilschnitt 21 mit ein, und zwar u.a. die axiale Sehnenlänge *b*. Zur näheren Erläuterung hierfür wird auf Fig. 2 verwiesen, worin wesentliche Größen für die zweidimensionale Auslegung von Schaufel-Profilschnitten 21 in Quasi-Stromflächen *QS* angegeben sind, die im folgenden näher definiert werden.

Fig. 2 zeigt zwei Schaufelprofilschnitte 21 aus einem Rotor-Schaufelgitter 3 oder einem Stator-Schaufelgitter 2, wobei alle Profilschnitte 21 eines Schaufelgitters 2, 3 identisch sind und um die im allgemeinen homogene Teilung *t* in Umfangsrichtung φ gegeneinander versetzt sind. Dabei ist hier ein Koordinatensystem gewählt, das eine in Umfangsrichtung φ verlaufende Umfangskoordinate rφ aufweist sowie eine entlang der Quasi-Stromfläche *QS* in Axialrichtung x verlaufende Koordinate x', auf der die prozentuale axiale Sehnenlänge *b* aufgetragen ist.

Wie üblich besteht ein Schaufelprofilschnitt 21 im wesentlichen aus einem Vorderkanten-Teilkreis 22 (der auch Teil einer Ellipse sein kann), einer überwiegend konvexen Saugseite 23, einem Hinterkanten-Teilkreis 24 (der ebenfalls Teil einer Ellipse sein kann) und einer überwiegend konkaven Druckseite 25. In diesem Zusammenhang zeigt Fig. 2 weiterhin eine sog. Bi-Tangente $u_b$. Hierbei handelt es sich um eine gleichzeitige Tangente an den Vorderkanten-Teilkreis 22 und den Hinterkantenteilkreis 24, welche mit der Parallelen zu der axialen Richtung (Sehnenlänge b) den bereits genannten Staffelungswinkel $\beta_s$ einschließt.

Zwischen zwei einander benachbarten Schaufelprofilschnitten 21 befindet sich eine Engstelle e, die als die kleinste Entfernung von der Druckseite 25 des einen Schaufelprofilschnittes 21 zur Saugseite 23 des anderen Schaufelprofilschnittes 21 definiert ist. Diese kleinste Entfernung ergibt sich dabei aus der in der Schaufelgittertheorie bekannten Methode der "kleinsten einbeschriebenen Kreise". In Turbinen-Schaufelgittern 2, 3 ist dabei üblicherweise (und somit auch hier) die Engstelle e die kleinste Entfernung vom Übergangspunkt der Druckseite 25 in den Hinterkanten-Teilkreis 24 des einen Schaufelprofilschnittes 21 zur Saugseite 23 des anderen Schaufelprofilschnittes 21.

Die Teilung *t* ist gemäß Fig.2 definiert als der Abstand zweier benachbarter Schaufelprofile 21 in Umfangsrichtung bzw. in Richtung der Umfangskoordinate in Zylinderkoordinaten $r\varphi$.
Die axiale Sehnenlänge *b* ist definiert als die Lauflänge von der Schaufelvorderkante 11 zur Schaufelhinterkante 12 entlang eines axialen Schnittes auf der Quasi-Stromfläche *QS*, was wie bereits erwähnt in Fig.2 auf der Koordinate x' aufgetragen ist.

Werden nun für ein Schaufelgitter 2 bzw. 3 die Schaufelprofilschnitte 21 derart ausgebildet, daß für alle Quasi-Stromflächen *QS* unterhalb von 55% Schaufelhöhe $h_{sv}$ bzw. $h_{sh}$ der Quotient *t/b* größer als 1,0 ("eins") ist, so erhält man ein Schaufelgitter 2, 3, bei welchem unter Verwendung höherer Zweifel-Zahlen sowie einem geänderten Verlauf der Druckverteilung die Anzahl $N_{off}$ der Schaufeln 4, 5 je Schaufelkranz bzw. je Schaufelgitter 2, 3 gegenüber der bisher üblichen Anzahl erheblich reduziert ist.
Das genannte Kriterium t/b>1,0 für alle Quasi-Stromflächen (QS) unterhalb von 55% Schaufelhöhe ($h_{sv}$ bzw. $h_{sh}$), und damit die Erfindung, beschränkt sich auf Axialturbinen, für die $\beta_s < 30°$ für alle Quasi-Stromflächen (QS) unterhalb von 55% Schaufelhöhe ($h_{sv}$ bzw. $h_{sh}$) und stellt die im kennzeichnenden Teil des Patentanspruchs angegebene Alternativ-Bedingung (B) dar.

Noch weiter gesteigert werden kann die erzielbare Wirkung sowie somit der Gesamt-Wirkungsgrad der Axialturbine 1 durch die im folgenden erläuterten Zusatzmaßnahmen hinsichtlich der Schaufelprofilschnitte 21, zu deren Erläuterung abermals auf Fig.2 verwiesen wird.

Wie üblich ist eine Profilablenkung $\gamma$ des Schaufelprofilschnittes 21 stromab der Engstelle e definiert als der maximale Winkel $\gamma$ zwischen einer Tangente $u_e$ an die Saugseite 23 in der Position der Engstelle e und einer beliebigen Tangente $u_s$ an das Profil auf der Saugseite 23 zwischen der Position der Engstelle e und dem Übergangspunkt der Saugseite 23 in den Hinterkanten-Teilkreis 24.

Wird nun für alle Quasi-Stromflächen *QS* unterhalb von 55% Schaufelhöhe $h_{sv}$ bzw. $h_{sh}$ stromab der Engstelle e zwischen einander benachbarten Schaufelprofilschnitten 21 die saugseitige Profilablenkung $\gamma$ größer als 27° gewählt, so ergibt sich mit der gemäß den genannten Bedingungen (A) und/oder (B) erheblich reduzierten Schaufel-Anzahl $N_{off}$ ein besonders hoher Wirkungsgrad der Axialturbine 1.

Gleiches gilt für einen derart gestalteten Schaufelprofilschnitt 21, bei welchem im Profilverlauf der Saugseite 23 zwischen 3% und 15% axialer Sehnenlänge *b* ein Wendepunkt W vorliegt (vgl. Fig.2), wobei 0% axiale Sehnenlänge *b* die Schaufelvorderkante 11 und 100% axiale Sehenlänge *b* die Schaufelhinterkante 12 bezeichnet.

Nicht nur durch Berechnung, sondern auch in einem Versuch wurde an einer Axialturbine 1 mit den beschriebenen Maßnahmen eine nahezu 20%ige Reduzierung der Schaufel-Anzahl $N_{off}$ gegenüber einer Standard-Auslegung erzielt. Eine entsprechende Reduzierung des Modulgewichts und der Herstellkosten folgt daraus. Weiterhin ergab sich eine Wirkungsgradverbesserung um 0,3%. Bei voller Ausschöpfung des Potentials der Erfindung (z.B. durch Einsatz einer komplett neuartigen Beschaufelung) ist eine fast 40%ige Reduzierung der Schaufelzahlen und damit des Gewichts und der Herstellkosten möglich, wobei der Wirkungsgrad der Axialturbine 1 konstant gehalten werden kann.

**Bezugszeichenliste:**

1    Axialturbine
2    Leit- oder Stator-Schaufelgitter
3    Lauf- oder Rotor-Schaufelgitter
4    Stator-Schaufel(n)
5    Rotor-Schaufel(n)
6    Statorwand (innen)
7    Strömungskanal

8    radial innere Kanalbegrenzung (von 7)
9    radial äußere Kanalbegrenzung (von 7)
10   Laufscheibe
11   Schaufelvorderkante
12   Schaufelhinterkante
13   Gehäusewand (außen)
14   Maschinenachse

S    Strömungsrichtung
x    Axialrichtung        Axialkoordinate eines Punktes: X
r    Radialrichtung       Radialkoordinate eines Punktes: R
φ    Umfangsrichtung

QS    Quasi-Stromfläche
QS′   Quasi-Stromfläche

$h_{sv}$    Höhe der Schaufelvorderkante 11
$h_{sh}$    Höhe der Schaufelhinterkante 12

21   Schaufelprofilschnitt
22   Vorderkanten-Teilkreis (von 21 )
23   Saugseite (von 21)
24   Hinterkanten-Teilkreis (von 21)
25   Druckseite (von 21 )

t    Teilung
b    axiale Sehnenlänge
e    Engstelle (zwischen benachbarten Schaufelprofilschnitten 21)
$u_b$    Bi-Tangente an 22 und 24
$u_e$    Tangente an die Saugseite 23 in der Position der Engstelle e
$u_s$    Tangente an die Saugseite 23 des Schaufelprofilschnittes 21
W    Wendepunkt
$\beta_s$    Staffelungswinkel

**Patentansprüche**

1.   Axialturbine (1) mit zumindest je einem Rotor-Schaufelgitter (3) und einem Stator-Schaufelgitter (2) von in einem ringförmigen Strömungskanal (7) in Turbinen-Umfangsrichtung (φ) betrachtet in Reihe angeordneten Turbinen-Schaufeln (4, 5),
     **dadurch gekennzeichnet daß** die Anzahl der Schaufeln der Stator-Schaufelgitter (2) bzw. Rotor-Schaufelgitter (3) so gewählt wird,
     daß unter Zugrundelegung der zunächst folgenden Definitionen für die Schaufelgitter (2, 3) zumindest eine der beiden nachfolgend genannten Bedingungen (A), (B) gilt:

     -    X bezeichne die Axialkoordinate und R die Radialkoordinate eines Schaufel-Punktes,
     -    HA ist der in Strömungsrichtung (S) betrachtet hintere und in Radialrichtung (r) betrachtet äußere Schaufel-Eckpunkt,
     -    HI ist der in Strömungsrichtung (S) betrachtet hintere und in Radialrichtung (r) betrachtet innere Schaufel-Eckpunkt,
     -    VA ist der in Strömungsrichtung (S) betrachtet vordere und in Radialrichtung (r) betrachtet äußere Schaufel-Eckpunkt,
     -    VI ist der in Strömungsrichtung (S) betrachtet vordere und in Radialrichtung (r) betrachtet innere Schaufel-Eckpunkt,

$$\bar{C}_{ax} = \frac{\sqrt{(X(HA)\text{-}X(VA))^2 + (R(HA\text{-}R(VA))^2} + \sqrt{(X(HI)\text{-}X(VI))^2 + (R(HI)\text{-}R(VI))^2}}{2}$$

$$\bar{r} = \frac{R(VA)+R(VI)+R(HA)+R(HI)}{4},$$

$N_{off}$ ist die Anzahl der Schaufeln (4, 5) des Schaufelgitters (2, 3)

$$Y = \frac{2\pi\bar{r}}{N_{off}\bar{\bar{C}}_{ax}}$$

ist der 3D-Teilungsparameter des Schaufelgitters (2, 3)

-   eine Quasi-Stromfläche (*QS*) des Schaufel-Gitters (2, 3) ist eine rotationssymmetrische Fläche, welche sich durch einen beliebigen rotationssymmetrischen Schnitt durch das Schaufel-Gitter (2, 3) ergibt, mit der Bedingung, daß dieser Schnitt durch die gleiche prozentualen Höhe ($h_{sv}$) der Schaufelvorderkante (11) und prozentuale Höhe ($h_{sh}$) der Schaufelhinterkante (12) verläuft, wobei
-   $h_{sv} = R(VA) - R(VI)$ und $h_{sh} = R(HA) - R(HI)$ ist;
-   die Teilung *t* ist der Abstand zweier benachbarter Schaufelprofilschnitte (21) in Turbinen-Umfangsrichtung ($\varphi$),
-   die axiale Sehnenlänge *b* ist die Lauflänge von der Schaufel vorderkante (11) zur Schaufelhinterkante (12) entlang eines axialen Schnittes auf der Quasi-Stromfläche (*QS*):
-   $\beta_s$ ist der Staffelungswinkel der Schaufelgitter (2, 3)

Bedingung (A): Der 3D Teilungsparameter Y ist größer als 1,0 und es gilt $\beta_s < 30°$ für alle Quasi-Stromflächen (QS) unterhalb von 55% Schaufelhöhe ($h_{sv}$ bzw. hsh),

Bedingung (B): Der Quotient t/b ist für alle Quasi-Stromflächen (QS) unterhalb von 55% Schaufelhöhe ($h_{sv}$ bzw. $h_{sh}$) größer als 1,0 und es gilt $\beta_s < 30°$ für alle Quasi-Stromflächen (QS) unterhalb von 55% Schaufelhöhe ($h_{sv}$ bzw. $h_{sh}$).

**2.** Axialturbine nach Anspruch 1 mit einem derart gestalteten Schaufelprofilschnitt (21), daß für alle Quasi-Stromflächen (*QS*) unterhalb von 55% Schaufelhöhe ($h_{sv}$ bzw. $h_{sh}$) stromab der Engstelle (e) zwischen einander benachbarten Schaufelprofilschnitten (21) die saugseitige Profilablenkung $\gamma$ größer als 27° ist, wobei die Profilablenkung $\gamma$ stromab der Engstelle (e) definiert ist als der maximale Winkel $\gamma$ zwischen der Tangente ($u_e$) an der Position der Engstelle (e) auf der Saugseite (23) und einer beliebigen Tangente ($u_s$) an das Schaufelprofil auf der Saugseite (23) zwischen der Position der Engstelle (e) und dem Übergangspunkt der Saugseite (23) in den Hinterkanten-Teilkreis (24) des Schaufelprofilschnittes (21).

**3.** Axialturbine nach Anspruch 1 oder 2 mit einem derart gestalteten Schaufelprofilschnitt (21), daß im Profilverlauf von dessen Saugseite (23) zwischen 3% und 15% axialer Sehnenlänge *b* ein Wendepunkt (W) vorliegt, wobei 0% axiale Sehnenlänge *b* die Schaufelvorderkante (11) und 100% axiale Sehnenlänge *b* die Schaufelhinterkante (12) bezeichnet.

**Claims**

**1.** Axial-flow turbine (1 ) with at least one rotor-blade cascade (3) and at least one stator-blade cascade (2) of turbine blades (4, 5) arranged in rows within an annular flow duct (7) in the turbine circumferential direction ($\varphi$), **characterized in that** the number of blades of the stator blade cascade (2) or the rotor blade cascade (3), respectively, is selected such that, on the basis of the following definitions for the blade cascades (2, 3), at least one of the conditions (A), (B) specified further below will apply:

-   *X* designates the axial coordinate and *R* the radial coordinate of a blade point,

-   *HA* is the blade corner point which is rearward in the flow direction (*S*) and outward in the radial direction (r),

-   *HI* is the blade comer point which is rearward in the flow direction (*S*) and inward in the radial direction (r),

-   *VA* is the blade comer point which is forward in the flow direction (*S*) and outward in the radial direction (r),

- *VI* is the blade corner point which is forward in the flow direction (S) and inward in the radial direction (r).

$$\bar{C}_{ax} = \frac{\sqrt{(X(HA)\text{-}X(VA))^2 + (R(HA\text{-}R(VA))^2} + \sqrt{(X(HI)\text{-}X(VI))^2 + (R(HI)\text{-}R(VI))^2}}{2}$$

$$\bar{r} = \frac{R(VA)+R(VI)+R(HA)+R(HI)}{4},$$

$N_{off}$ is the number of blades (4, 5) of the blade cascade (2, 3).

$$Y = \frac{2\pi\bar{r}}{N_{off}\bar{C}_{ax}}$$

is the 3D-pitch parameter of the blade cascade (2, 3)

- a quasi flow surface (*QS*) of the blade cascade (2, 3) is a rotationally symmetric surface which is produced by any rotationally symmetric section through the blade cascade (2, 3), and to which the condition applies that this section extends through the same percentile height ($h_{sv}$) of the blade leading edge (11) and the same percentile height ($h_{sh}$) of the blade trailing edge (12), with
- $h_{sv} = R(VA) - R(VI)$ and $h_{sh} = R(HA) - R(HI)$;
- the pitch *t* is the spacing of two adjacent blade-profile sections (21) in the turbine circumferential section ($\varphi$),
- the axial chord length *b* is the running length from the blade leading edge (11) to the blade trailing edge (12) along an axial section on the quasi flow surface *(QS)*,
- $\beta_s$ is the stagger angle of the blade cascade (2, 3).

Condition (A): The 3D pitch parameter Y is greater than 1.0 and $\beta_s < 30°$ applies to all quasi flow surfaces (*QS*) below 55 % blade height ($h_{sv}$ or $h_{sh}$, respectively),

Condition (B): The quotient *t/b* is greater than 1.0 for all quasi flow surfaces (*QS*) below 55 % blade height ($h_{sv}$ or $h_{sh}$, respectively) and $\beta_s < 30°$ applies to all quasi flow surfaces (*QS*) below 55 % blade height ($h_{sv}$ or $h_{sh}$, respectively).

2. Axial-flow turbine in accordance with Claim 1 with the blade-profile section (21) designed such that the suction-side profile deflection $\gamma$ is greater than 27° for all quasi flow surfaces *(QS)* below 55 % blade height ($h_{sv}$ or $h_{sh}$, respectively) downstream of the throat (e) between adjacent blade-profile sections (21),
with the profile deflection $\gamma$ downstream of the throat (e) being defined as the maximum angle $\gamma$ between the tangent ($u_e$) at the position of the throat (e) on the suction side (23) and any tangent ($u_s$) to the blade profile on the suction side (23) between the position of the throat (e) and the transition point of the suction side (23) into the trailing-edge pitch circle (24) of the blade-profile section (21).

3. Axial-flow turbine in accordance with Claim 1 or 2 with the blade-profile section (21) designed such that there is an inflection point (W) in the profile of the suction side (23) between 3 % and 15 % axial chord length *b*,
with 0 % axial chord length b defining the blade leading edge (11) and 100 % axial chord length b defining the blade trailing edge (12).

**Revendications**

1. Turbine axiale (1 ) avec au moins une grille d'aubes de rotor (3) et au moins une grille d'aubes de stator (2) d'aubes de turbine (4, 5) disposées en série dans un canal d'écoulement annulaire (7) vues dans le sens circonférentiel ($\varphi$), **caractérisée en ce que** le nombre d'aubes de la grille d'aubes de stator (2) et/ou de la grille d'aubes de rotor (3) est choisi de sorte que, sur la base des définitions suivantes pour les grilles d'aubes (2, 3), au moins une des deux conditions (A), (B) spécifiées ci-après s'applique :

- *X* désigne la coordonnée axiale et *R* la coordonnée radiale d'un point d'aube,

- *HA* est le point d'angle d'aube arrière vu dans le sens d'écoulement *(S)* et extérieur vu dans le sens radial (r),

- *HI* est le point d'angle d'aube arrière vu dans le sens d'écoulement *(S)* et intérieur vu dans le sens radial (r),

- *VA* est le point d'angle d'aube avant vu dans le sens d'écoulement *(S)* et extérieur vu dans le sens radial (r),

- *VI* est le point d'angle d'aube avant vu dans le sens d'écoulement *(S)* et intérieur vu dans le sens radial (r).

$$\bar{C}_{ax} = \frac{\sqrt{(X(HA)\text{-}X(VA))^2 + (R(HA\text{-}R(VA))^2} + \sqrt{(X(HI)\text{-}X(VI))^2 + (R(HI)\text{-}R(VI))^2}}{2}$$

$$\bar{r} = \frac{R(VA)+R(VI)+R(HA)+R(HI)}{4},$$

$N_{off}$ est le nombre d'aubes (4, 5) de la grille d'aubes (2, 3).

$$Y = \frac{2\pi\bar{r}}{N_{off}\bar{C}_{ax}}$$

est le paramètre de pas 3D de la grille d'aubes (2, 3)

- une quasi-surface d'écoulement *(QS)* de la grille d'aubes (2, 3) est une surface à symétrie de révolution qui est engendrée par une section quelconque à symétrie de révolution à travers la grille d'aubes (2, 3), et remplissant la condition que cette section s'étend sur la même hauteur en pourcentage ($h_{sv}$) du bord d'attaque de l'aube (11) et la même hauteur en pourcentage ($h_{sh}$) du bord de fuite (12), avec
- $h_{sv} = R(VA) - R(VI)$ et $h_{sh} = R(HA) - R(HI)$ ;
- le pas *t* est la distance entre deux sections adjacentes de profil d'aube (21) dans le sens circonférentiel (φ) de la turbine,
- la longueur axiale de corde *b* est la longueur courante du bord d'attaque de l'aube (11) au bord de fuite (12) le long d'une section axiale de la quasi-surface d'écoulement *(QS)*,
- $\beta_s$ est l'angle de décalage de la grille d'aubes (2, 3).

Condition (A) :     Le paramètre de pas 3D Y est supérieur à 1,0 et $\beta_s < 30°$ s'applique à toutes les quasi-surfaces d'écoulement *(QS)* au-dessous de 55 % de la hauteur d'aube ($h_{sv}$ et/ou $h_{sh}$),

Condition (B) :     Le quotient *t*/*b* est supérieur à 1,0 pour toutes les quasi-surfaces d'écoulement *(QS)* au-dessous de 55 % de la hauteur d'aube ($h_{sv}$ et/ou $h_{sh}$) et $\beta_s < 30°$ s'applique à toutes les quasi-surfaces d'écoulement *(QS)* au-dessous de 55 % de la hauteur d'aube ($h_{sv}$ et/ou $h_{sh}$).

**2.** Turbine axiale selon la revendication 1 avec une section de profil d'aube (21) configurée de sorte que la déflexion du profil γ à l'extrados est supérieure à 27° pour toutes quasi-surfaces d'écoulement *(QS)* au-dessous de 55 % de la hauteur d'aube ($h_{sv}$ ou $h_{sh}$) en aval du rétrécissement (e) entre deux sections adjacentes de profil d'aube (21), la déflexion de profil γ en aval du rétrécissement (e) étant définie comme angle maximal γ entre la tangente ($u_e$) à la position du rétrécissement (e) à l'extrados (23) et une tangente quelconque ($u_s$) au profil d'aube à l'extrados (23) entre la position du rétrécissement (e) et le point de transition de l'extrados (23) vers le cercle primitif du bord de fuite (24) de la section de profil d'aube (21).

**3.** Turbine axiale selon la revendication 1 ou 2 avec une section de profil d'aube (21) configurée de sorte qu'existe un point d'inflexion W dans le profil de son extrados 23, situé entre 3 % et 15 % de la longueur axiale b de la corde, sachant que 0 % de longueur axiale *b* de la corde définit le bord d'attaque de l'aube (11 ) et 100 % de longueur axiale *b* de la corde définit le bord de fuite de l'aube (12).

Fig.1

*Fig. 2*